# EUROPEAN PATENT APPLICATION

(11) **EP 2 025 226 A1**
(43) Date of publication of application: **18.02.2009**
(21) Application number: 07730478.0
(22) Date of filing: 07.02.2007
(51) Int. Cl.: A01N 1/00

(54) **USE OF COMBINATIONS OF METHYL ETHYL KETONE PEROXIDE BY SPRAYING**

(30) Priority: 26.05.2006 ES 200601388
(71) Applicant: Cadec, S.l.N.E., 28016 Madrid (ES)
(72) Inventor: CHÁVEZ INZUNZA, Javier, 28003 Madrid (ES)
(74) Representative: Sugranes Moliné, Pedro
(86) International application number: PCT/ES2007/070028
(87) International publication number: WO 2007/138144

(57) **Abstract**

Composition of methyl ethyl ketone peroxide as biocide, applied by spraying, for human and veterinary hygiene; of utility in the private sphere and in public health and, particularly, preventing the organic matter from its natural surface decomposition due to the passage of time until the collection for treatment and/or elimination, avoiding proliferation of organisms accompanying said situation and the risk of intrinsic infectious contagion. The compositions permitting such biocidal action are a mixture of from 0.01 to 14% methyl ethyl ketone peroxide, from 1 to 60% glycols or alcohols, from 1 to 60% water and, optionally, from 0 to 10% stabilisers, colourants, scents and/or other additives, from 0 to 10% surfactants and from 0 to 10% acids, providing to the product a solubility allowing its spraying in order to act as antiseptic for healthy skin, disinfectant for surfaces and for the maintenance of organic matter and its residues.

## Description

### Technical Field of the Invention

The use of methyl ethyl ketone peroxide by spraying allows by means of a direct and simple administration technique -without complex applications or need for limiting previous conditions - its use in the activities of thanatopraxy, taxidermy, anthropology, human and animal histology, human and animal anatomy, entomology, embalming practices, archaeology, botany, treatment and conservation of skins, wood treatment, dermatological disease treatment, cleaning and disinfection of all types of surfaces, facilities and monuments, but most of all for the external conservation and disinfection of animal carcasses, human corpses or their residues -for limited time periods-, as well as those organic (plant and animal) residues from kitchens, restaurants, hospitals, food distribution, handling and/or marketing centres and the like.

This is particularly important in the animal health sector, i.e., in the areas around animal production farms, where hygiene conditions are not the most optimal and where epizooties, which require a strong disinfectant for the cleaning and disinfection of the facilities, of persons, vehicles and utensils used therein and for the external and surface conservation of animal bodies and their residues (organic, clinical or infectious) until that they are collected for their subsequent treatment, often occur.

### Background of the Invention

Currently, there are many substances in the world market with disinfectant properties, but very few also have the capacity of maintenance or conservation of organic matter, the existing substances with this capacity having very pungent and unpleasant smells, some even having greater consequences, such as being susceptible of causing carcinogenic effects.

A long time ago, animal burial with quicklime was widely used as system of elimination of the bodies and residues of these animals in the animal health sphere, but current environmental law, particularly after the cases of bovine spongiform encephalopathy occurring in the European Union, prohibits these procedures, the collection of the animals by official authorized entities responsible for their subsequent elimination being mandatory.

Accordingly, the companies responsible for this management must send suitable transport means to livestock facilities for the removal of the bodies, but this is not always feasible with the speed that would be required to prevent the spread of diseases.

For that reason, compositions have been developed with methyl ethyl ketone peroxide which allow, in a simple and practical manner based on the spraying of the formulations on the bodies or residues, facilitating their maintenance and conservation in optimal hygienic conditions until that they are collected by the authorized managing entities to prevent the foci of infection, of bad smells and the occurrence and proliferation of decomposing organisms of the organic matter.

Methyl ethyl ketone peroxide is currently used for the conservation of human or animal tissue, although this use is different from the use proposed by the present patent in two aspects:

Firstly, the composition currently used requires complex techniques for its application, such as those for embalming (arterial insufflation), or must be applied by immersion, unlike the present use patent which, as indicated by its title, is applied in a simple manner by simple conventional spraying. This is possible due to the fact that in the present composition glycols or alcohols are included which allow water solubility of the preparation and a better microdiffusion of the solution at the moment of being sprayed.

In addition, this system of application and the composition presented herein allow a reduction of costs in the manufacture of the product as well as in the transport (due to that fact the hazard classification of the preparation is reduced as the content of active oxygen in the formulation is considerably decreased), and a reduction in the amount of product to be used, which leads to cost savings, greater safety for handlers and users of the formulation, and also a reduction of the risk of environmental contamination.

Secondly, the purpose of the mentioned use by embalming or immersion is its application in conservation of dead bodies due to cultural factors and for pathology and anatomy studies in education; however, the present invention has an agro-industrial, health and environmental purpose, focused on the disinfection, conservation and maintenance of organic matter, protecting said matter from the external surface decomposition thereof due to the passage of the time until the moment of being collected for its treatment and subsequent elimination, particularly in the animal health sphere, with the purpose of preventing the spread of diseases as well as the proliferation of organisms (bacteria, viruses, fungi, yeasts and insects) accompanying said situation, thus preventing the entailed risk of infectious contagion.

Finally, in another order of application and use, methyl ethyl ketone peroxide is widely used for dewaxing lubricating oils for pharmaco-chemical separations, as a base or component of paints, enamels, lacquers, varnishes, sealants, adhesives, resins, inks, diluents, removers, cellulose derivatives for liquid/liquid or solid/liquid extraction operations, cleaning operations or for the polymerization of unsaturated polyester resins together with cobalt or amine accelerators; there is neither at the time prior to the studies carried out, nor currently, a substance applied for the specific use that the present invention intends to claim.

For this reason, and after having conducted studies, a patent application is hereby filed for the use of combinations of methyl ethyl ketone peroxide by spraying as a disinfectant and conservation factor of organic matter, since up until now, said use has not been developed with the mentioned substance.

### Detailed Disclosure of the Invention

The filed patent makes reference to the specific use of combinations of methyl ethyl ketone peroxide (CE number 215-661-2 and CAS number 1338-23-4) by spraying for the purpose of disinfecting, maintaining and preserving from its natural decomposition, at the surface level, the organic matter in general and, particularly, animal carcasses or human corpses and organic residues against the actual consequences of said decomposition of organic matter due to the passage of time, preventing at the same time the proliferation of the cadaveric fauna accompanying said situation by its added qualities of disinfection which, further given its characteristics, allow its application both in persons and on surfaces.

With the compositions herein developed with a percentage from 0.01 to 14% methyl ethyl ketone peroxide as the active ingredient, a strong insect repellent and a strong bactericide, fungicide, viricide for healthy skin, for surfaces and for facilities are obtained, allowing complete hygiene in the sphere in which the product is applied.

The combination of these proportions of methyl ethyl ketone peroxide with 1 to 60% glycols or alcohols, 1 to 60% water, with or without the incorporation of additives such as stabilising agents, colourants and scents, and/or surfactants, and/or acids, allows the formulation of water-soluble solutions that are easy to apply by spraying.

This system of application is really useful for antisepsis of healthy skin, for the hygiene and disinfection of all types of facilities, being able to reach all corners thereof, and also for the treatment of dead bodies and organic residues until the time they are collected for their subsequent treatment and/or elimination.

With the use of methyl ethyl ketone peroxide as an active substance by spraying, the disinfection of the persons, vehicles and utensils used in facilities to be treated, particularly, in the animal health and agroindustrial sphere, very easily achieved, preventing the surface putrefaction of animal bodies and residues (organic, clinical or infectious) until they are collected for their subsequent treatment since these formulations delay external decomposition, preventing the agents existing in the environment from carrying out the natural process, considerably reducing the actual smell of the rot of organic matter, and also the proliferation of the cadaveric fauna (bacteria, viruses, fungi, yeasts and insects and other decomposing organisms) due to their biocidal qualities, thus preventing the spread of diseases and intrinsic infections which said situation could cause.

Methyl ethyl ketone peroxide in the compositions herein formulated, unlike the products used as preservatives of organic matter, has a low toxicity, is not susceptible of producing carcinogenic effects, does not contaminate the environment, while at the same time it reduces the economic costs related to the removal and subsequent treatment of dead bodies and residues, particularly in the livestock farming and agroindustrial sphere.

### Embodiment

The application of methyl ethyl ketone peroxide is carried out by diluting it in glycols or alcohols which facilitate its water solubility, its application and its stability, in the presence or not of acids, surfactants and/or additives. The resulting formulations firstly allow handling them without risks for the users, secondly being stored without any hazards given that they are not subject to ADR regulations, and finally, using them in a simple manner by means of spraying that is nebulised on the objects or surfaces to be treated, covering them as completely as possible to allow their disinfecting function to act and, in the case of inert organic matter, preventing from its external putrefaction.

Given the water solubility of the prepared compositions, the latter are suitable for their dissolution in water at different doses according to the sphere of application and the objective that it is intended to be attained with said application.

For example, for the application of the product on an animal carcass, the entire surface and both sides of the body must be sprayed by means of the sprayer of the container, or a backpack duster, especially focusing all entry ways, such as the mouth, nose, anus or cutaneous wounds, thus preventing the external agents existing in the environment from accelerating the natural process of decomposition (with the resulting proliferation of bacteria, viruses, fungi, yeasts, larvae and insects) and preventing the surrounding area from being contaminated, thus protecting the rest of the farm.

Regarding its application as an antiseptic for healthy skin, it must be applied by means of the sprayer of the container on the hands and forearms, distributing it over the entire area by rubbing, especially focusing on the area between the fingers.

For the disinfection of surfaces and transport means, the area to be treated must be sprayed, seeing to it that the product reaches all the corners and grooves of the facilities. The application in animal transport means is of special interest in the event of infectious epizooties given that they are an ideal carrier for the spread of diseases to other places.

Regarding the application on residues, the entire upper part in contact with the outside must be sprayed, the operation being periodically repeated as more residues are gradually incorporated into the container compartment.

## Claims

1. Use of a composition by spraying for the surface disinfection and conservation of organic matter based on methyl ethyl ketone peroxide, **characterized in that** it comprises:
- From 0.01 to 14% methyl ethyl ketone peroxide.
- From 1% to 60% glycols or alcohols.
- From 1% to 60% water.
- From 0% to 30% stabilisers, colourants, scents and/or other families of additives.
- From 0% to 30% acids.
- From 0% to 30% surfactants.

2. The composition according to claim 1, **characterized in that** it is applied by spraying on any type of surface for disinfection.

3. The composition according to claim 1, **characterized in that** it is applied by spraying as an antiseptic for healthy skin.

4. The composition according to claim 1, **characterized in that** it is applied by spraying for the surface maintenance and conservation of organic matter of animal or plant origin.

5. The composition according to claim 1, **characterized in that** it is applied by spraying for the surface treatment, maintenance and conservation of animal carcasses and animal or plant tissues.

6. The composition according to claim 1, **characterized in that** it is applied by spraying for the surface treatment, maintenance and conservation of human corpses and tissues.

7. The composition according to claim 1, **characterized in that** it is applied by spraying for the conservation of animal residues.

8. The composition according to claim 1, **characterized in that** it is applied by spraying for the conservation of clinical or infectious residues.

9. The composition according to claim 1, **characterized in that** it is applied by spraying for the conservation of human residues.

10. The composition according to claim 1, **characterized in that** it is applied by spraying for the conservation of plant residues.

11. The composition according to claim 1, **characterized in that** it is applied by spraying for dermatological treatment.

12. The composition according to claim 1, **characterized in that** it is applied by spraying for the conservation of food residues of animal or plant origin.

## Amended claims

Statement under Art. 19.1 PCT
In view of the results of the "International Search Report" in relation to patent application number PCT/ES2007/070028, in exercising the right granted by Art. 19 of the Patent Cooperation Treaty, the claims have been amended as follows:
- The percentages of methyl ethyl ketone peroxide mentioned in "claim 1" have been reduced to 0.01% to 11.90%, maintaining the effectiveness of the substance and without overlapping the scope of protection claimed by other patents already granted.
- Claims 2 and 3 have been eliminated, given that with the result of the "International Search Report" we have recognized that for a higher effectiveness of the patent, the application of the substance by spraying on surfaces for disinfection and antiseptic for healthy skin cannot be claimed since it is not novel.

The aforementioned amendments have an effect in relation to the description of the invention, from the point of view that it takes away the value of the reference that is made for its application as an antiseptic for healthy skin and for the disinfection of surfaces.

Patent application PCT/ES2007/070028 does not contain drawings.
